# EUROPÄISCHE PATENTSCHRIFT

(11) **EP 1 637 640 B1**
(45) Veröffentlichungstag und Bekanntmachung des Hinweises auf die Patenterteilung: **05.03.2008**
(21) Anmeldenummer: 05017746.8
(22) Anmeldetag: 16.08.2005
(51) Int. Cl.: D06F 37/20, F16F 7/09

(54) **Dämpfer**
Damper
Amortisseur

(30) Priorität: 15.09.2004 DE 102004045066
(43) Veröffentlichungstag der Anmeldung: 22.03.2006
(73) Patentinhaber: SUSPA Holding GmbH, 90518 Altdorf (DE)
(72) Erfinder: Peuker, Thomas, 92260 Ammerthal (DE); Pelczer, Andreas, 91717 Wassertrüdigen (DE); Weder, Michael, 90455 Nürnberg (DE)
(74) Vertreter: Rau, Albrecht

(56) Entgegenhaltungen:
- EP-A- 0 407 755
- EP-A- 0 478 983
- EP-A- 0 702 165
- WO-A-95/14130
- DE-A1- 19 615 010

## Beschreibung

Die Erfindung betrifft einen Dämpfer, insbesondere für Waschmaschinen mit Schleudergang, gemäß dem Oberbegriff des Anspruchs 1.

Dämpfer werden zur Schwingungsdämpfung in Trommelwaschmaschinen eingesetzt, um einen ruhigen und erschütterungsfreien Lauf der Trommelwaschmaschine zu gewährleisten. Bekannte Dämpfer weisen bei unterschiedlichen Drehzahlen der Waschtrommel ein von der Schwingungsamplitude abhängiges Dämpfungsverhalten auf. Im Bereich kleiner Amplituden ist eine geringe Dämpfungswirkung der Dämpfer wünschenswert, wohingegen bei großen Amplituden eine möglichst hohe Dämpfungswirkung wünschenswert ist. Dieses amplitudenabhängige Dämpfungsverhalten resultiert in einem konstruktiv aufwendigen Aufbau der Dämpfer.

Ein gattungsgemäßer Dämpfer ist aus der WO 93/13333 A2 bekannt. Dieser umfasst ein rohrförmiges Gehäuse, das endseitig durch Verschluß-Kappen verschlossen ist. In dem Gehäuse ist eine Reibungs-Dämpfungs-Einheit mit einem axial vorstehenden Reibungs-Dämpfungs-Belag verschiebbar geführt, wodurch ein Anschlag der Reibungs-Dämpfungs-Einheit an den Verschluß-Kappen durch den Reibungs-Dämpfungs-Belag selbst gedämpft wird. Der Reibungs-Dämpfungs;-Einheit zugewandte InnenFlächen der Verschluß-Kappen, die somit als Anschlag-Flächen für die Reibungs-Dämpfungs-Einheit wirken, sind eben ausgebildet. Nachteilig an diesem bekannten Dämpfer ist, dass sein Dämpfungsverhalten nicht angepasst werden kann.

Aus der EP 0 702 165 A2 ist ein Dämpfer für Waschmaschinen mit einem Gehäuse und einem in dem Gehäuse verschiebbaren Stößel bekannt. An dem Stößel ist ein erster Reib-Ring angeordnet, der fest mit dem Stößel verbunden ist und gegen das Gehäuse reibt. Zwischen dem ersten Reib-Ring und einer ringförmigen Schulter ist ein zweiter Reib-Ring angeordnet, der entlang des Stößels verschiebbar ist.

Die DE 196 15 010 A1 offenbart einen Reibungs-Dämpfer für Waschmaschinen mit einem Gehäuse und einem verschiebbar in dem Gehäuse geführten Stößel, wobei am stößelaustrittseitigen Ende des Gehäuses ein Dämpfungs-Gehäuse ausgebildet ist, in dem ein einen Reib-Belag tragendes Dämpfungs-Element verschiebbar angeordnet ist.

In der WO 95/14130 A1 ist ein Reibungs-Dämpfer für eine Waschmaschine mit einem Gehäuse und einem Stößel offenbart, wobei an dem Stößel eine Verlängerung angeordnet ist. Auf der Verlängerung ist ein zentraler Körper verschiebbar geführt, wobei dieser äußere und innere Brems-Elemente aufweist, die gegen das Gehäuse und die Verlängerung reiben.

Aus der EP 0 407 755 A1 ist ein Reibungs-Dämpfer mit einem Gehäuse und einem Reibungs-Kolben bekannt. Auf dem Reibungs-Kolben sind Anschläge angeordnet, denen Feder-Elemente zugeordnet sind. Im Zwischenraum der Feder-Elemente ist eine Abstands-Hülse auf dem Reibungs-Kolben angeordnet, wobei die Abstands-Hülse einen Reib-Belag trägt, der gegen das Gehäuse reibt.

Hiervon ausgehend liegt der Erfindung die Aufgabe zugrunde, einen Dämpfer mit amplitudenabhängigem Dämpfungsverhalten derart weiterzubilden, dass dieser einfach und kostengünstig herstellbar ist. Ferner soll dieser ein besonders gutes Dämpfungsverhalten besitzen.

Diese Aufgabe wird durch die im kennzeichnenden Teil des Anspruchs 1 angegebenen Merkmale gelöst. Der Kern der Erfindung besteht darin, dass der elastische Reibungs-Dämpfungs-Belag in axialer Richtung zumindest teilweise frei liegt, sodass das Anschlag-Element im Falle großer Schwingungsamplituden unmittelbar mit dem Reibungs-Dämpfungs-Belag zusammen wirkt. Der Reibungs-Dämpfungs-Belag erfüllt somit gleichzeitig die Funktion eines Anschlagpuffers. Dies führt zu einem einfachen konstruktiven Aufbau und somit zu einer kostengünstigen Herstellung des Dämpfers.

Weitere vorteilhafte Ausgestaltungen der Erfindung ergeben sich aus den Unteransprüchen.

Weitere Merkmale, Einzelheiten und Vorteile der Erfindung sind der nachfolgenden Beschreibung entnehmbar, in der mehrere Ausführungsbeispiele anhand der beigefügten Zeichnungen näher erläutert werden. Diese zeigen:
- Fig. 1: eine Trommelwaschmaschine in schematischer Darstellung in Seitenansicht mit einem Dämpfer gemäß einem ersten Ausführungsbeispiel,
- Fig. 2: die Trommelwaschmaschine gemäß Fig. 1 in Vorderansicht,
- Fig. 3: einen Axialschnitt des Dämpfers gemäß Fig. 1,
- Fig. 4: eine perspektivische Ansicht eines Anpress-Kolbens des Dämpfers gemäß Fig. 1,
- Fig. 5: eine perspektivische Ansicht einer Verschluss-Kappe des Dämpfers gemäß Fig. 1,
- Fig. 6: eine Frontalansicht der Verschluss-Kappe gemäß Fig. 5,
- Fig. 7: eine Seitenansicht der Verschluss-Kappe gemäß Fig. 5,
- Fig. 8: einen Axialschnitt eines Dämpfers gemäß einem zweiten Ausführungsbeispiel,
- Fig. 9: einen Axialschnitt eines Dämpfers gemäß einem dritten Ausführungsbeispiel,
- Fig. 10: eine perspektivische Ansicht eines Anpress-Kolbens des Dämpfers gemäß Fig. 9,
- Fig. 11: eine Draufsicht auf den Anpress-Kolben gemäß Fig. 10,
- Fig. 12: einen Axialschnitt eines Dämpfers gemäß einem vierten Ausführungsbeispiel, und
- Fig. 13: eine perspektivische Ansicht eines Anpress-Kolbens des Dämpfers gemäß Fig. 12.

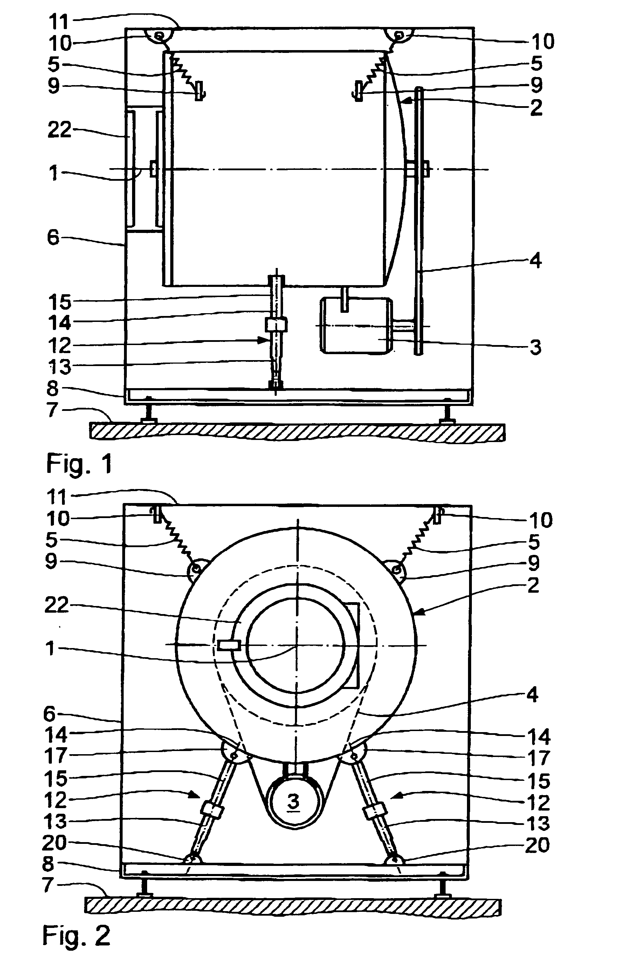

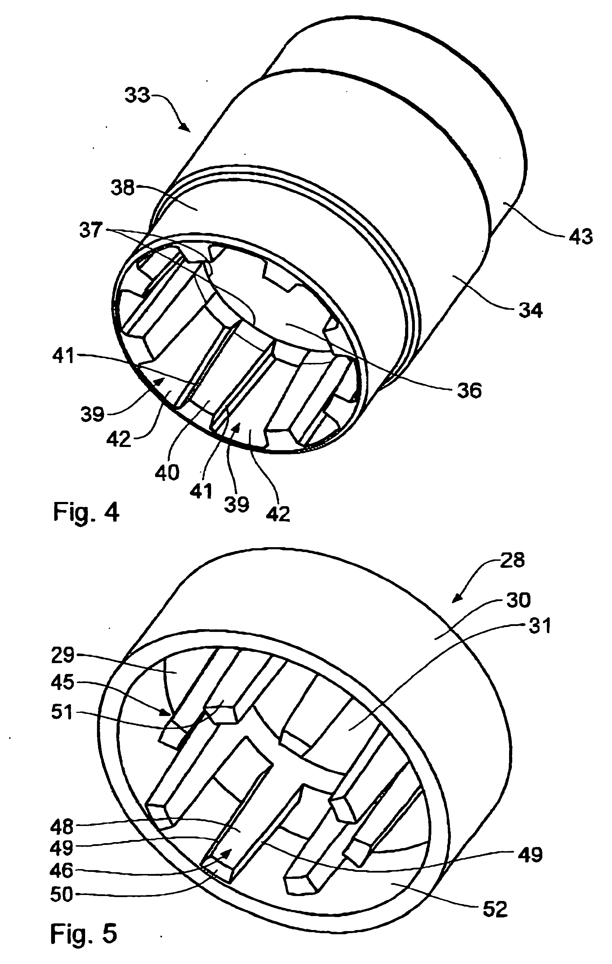

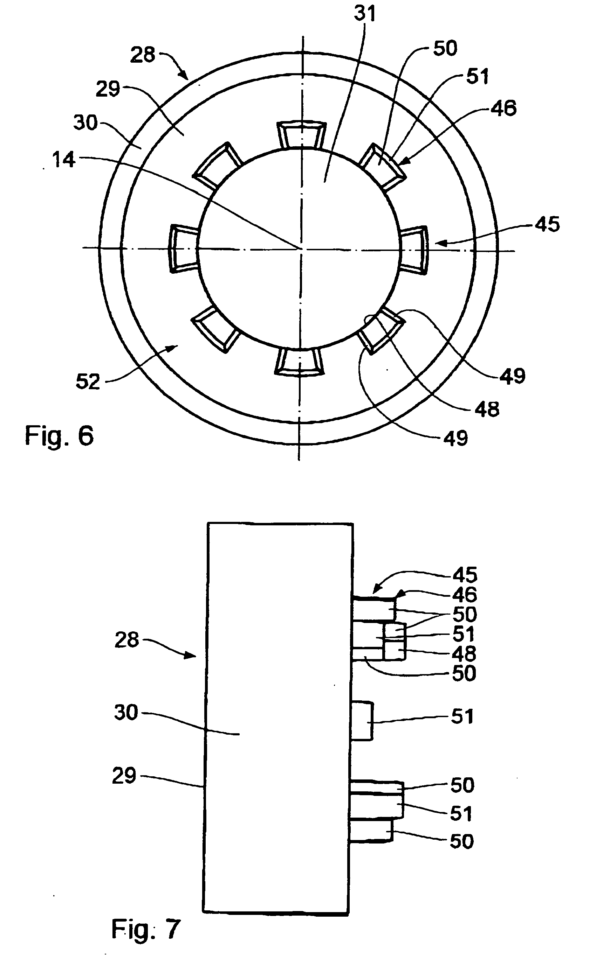

Nachfolgend wird unter Bezugnahme auf die Fig. 1 bis 7 ein erstes Ausführungsbeispiel der Erfindung beschrieben. Eine in den Fig. 1 und 2 dargestellte Trommelwaschmaschine mit waagerechter oder geneigter Trommel-Achse 1 weist ein schwingungsfähiges Wasch-Aggregat 2 mit einem Antriebs-Motor 3 auf, der eine nicht im Einzelnen dargestellte Wasch-Trommel über einen Riemen-Trieb 4 antreibt. Weitere mit dem Wasch-Aggregat 2 verbundene Bestandteile, beispielsweise ein Getriebe, sind der Einfachheit halber nicht dargestellt. Das schwingungsfähige Wasch-Aggregat 2 ist mittels Schrauben-Zugfedern 5 an einem WaschmaschinenGehäuse 6 aufgehängt, das gegenüber einem auf dem Boden 7 stehenden, einen Grundrahmen bildenden Maschinen-Gestell 8 abgestützt und mit diesem verbunden ist. Die Schrauben-Zugfedern 5 sind einerseits an Ösen 9 angebracht, die im oberen Bereich des Wasch-Aggregats 2 angeordnet sind. Andererseits sind sie an Ösen 10 aufgehängt, die am Waschmaschinen-Gehäuses 6 ausgebildet sind Das Gehäuse 6 ist mit einer Deckplatte 11. abgedeckt.

An der Unterseite des Wasch-Aggregats 2 sind mittig zwei nachfolgend genauer beschriebene Reibungsdämpfer 12 angebracht, die mit dem Maschinen-Gestell 8 verbunden sind. Jeder Reibungsdämpfer 12 weist ein rohrförmiges Gehäuse 13 mit einer Mittel-Längs-Achse 14 auf, in dem koaxial ein Stößel 15 verschiebbar geführt ist. Der Stößel 15 weist an seinem freien Ende ein erstes Befestigungs-Element 16 auf, mittels dem der Reibungsdämpfer 12 an einem Lager 17 an dem Wasch-Aggregat 2 derart angebracht ist, dass der Reibungsdämpfer 12 um eine zu der Trommel-Achse 1 parallele Schwenk-Achse 18 relativ zu dem Wasch-Aggregat 2 schwenkbar ist- An dem freien Ende des Gehäuses 13 ist ein zweites Befestigungs-Element 19 angebracht, mittels dem der Reibungsdämpfer 12 an einem Lager 20 an dem Maschinen-Gestell 8 derart angebracht ist, dass der Reibungsdämpfer 12 um eine zu der Trommel-Achse 1 parallele Schwenk-Achse 21 relativ zu dem Maschinen-Gestell 8 schwenkbar ist. Die Eingabe und Entnahme von Wäsche erfolgt durch eine an dem Wasch-Aggregat 2 angeordnete Klappe 22.

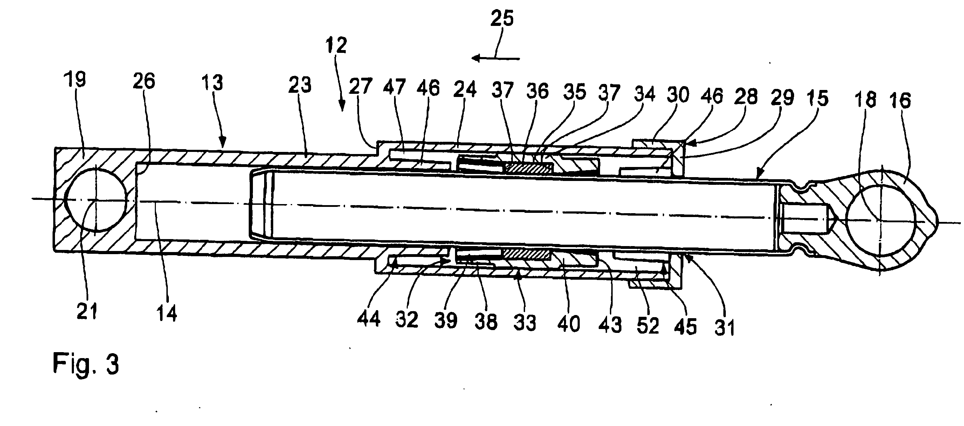

Im Folgenden wird unter Bezugnahme auf die Fig. 3 bis 7 der Aufbau des Reibungsdämpfers 12 genauer beschrieben. Das rohrförmige Gehäuse 13 des Reibungsdämpfers 12 weist einen Führungs-Abschnitt 23 und einen mit diesem einstückig ausgebildeten Aufnahme-Abschnitt 24 auf. Der Führungs-Abscbnitt 23 ist in einer Einschub-Richtung 25 dem Aufnahme-Abschnitt 24 nachgeordnet. Das freie Ende des Führungs-Abschnitts 23, welches gleichzeitig das freie Ende des Gehäuses 13 bildet, ist mittels eines Bodens 26 verschlossen. Der Boden 26 ist einstückig mit dem Befestigungs-Element 19 ausgebildet. Der Führungs-Abschnitt 23 weist einen Innen-Durchmesser auf, der derart gewählt ist, dass der Stößel 15 entlang der Einschub-Richtung 25 mit möglichst wenig Spiel geführt wird und haftreibungsfrei verschiebbar ist.

In Einschub-Richtung 25 vor dem Führungs-Abschnitt 23 ist der Aufnahme-Abschnitt 24 angeordnet. Der Aufnahme-Abschnitt 24 weist einen im Vergleich zu dem Innen-Durchmesser des Führungs-Abschnitts 23 größeren Innen-Durchmesser auf. Der Aufnahme-Abschnitt 24 ist mittels eines ringförmigen Anschlag-Bundes 27 an dem stößelseitigen Ende des Führungs-Abschnitts 23 befestigt.

An seinem dem Führungs-Abschnitt 23 abgewandten Ende ist der Aufnahme-Abschnitt 24 mittels einer Verschluss-Kappe 28 verschlossen. Die Verschluss-Kappe 28 weist einen ringförmigen Verschluss-Kappen-Bund 29 und einen daran befestigten rohrförmigen Befestigungs-Abschnitt 30 auf, wobei sich der Befestigungs-Abschnitt 30 in Richtung der Mittel-Längs-Achse 14 erstreckt und den Aufnahme-Abschnitt 24 umgreift Das dem Führungs-Abschnitt 23 abgewandte Ende des Aufnahme-Abschnitts 24 liegt gegen den Verschluss-Kappen-Bund 29 an und die Verschluss-Kappe 28 ist mittels einem nicht näher dargestellten Rastmechanismus im Bereich des Befestigungs-Abschnitts 30 gegen Verschiebung gesichert. Der ringförmige Verschluss-Kappen-Bund 29 bildet eine Verschluss-Kappen-Öffnung 31 aus, in der der Stößel 15 mit möglichst wenig Spiel geführt wird.

Innerhalb des Gehäuses 13 ist im Bereich des Aufnahme-Abschnitts 24 eine Reibungs-Dämpfungs-Einheit 32 angeordnet. Die Reibungs-Dämpfungs-Einheit 32 weist einen entlang der Mittel-Längs-Achse 14 verschiebbarer Anpress-Kolben 33 auf. Der Anpress-Kolben 33 ist im Wesentlichen rohrförmig ausgebildet und umfasst einen mittig gelegenen Anpress-Abschnitt 34, in dem eine dem Stößel 15 zugewandte umlaufende Ringnut 35 angeordnet ist. In der Ringnut 35 ist ein ringförmig umlaufender, elastischer Reibungs-Dämpfungs-Belag 36 angeordnet, der gegen Seitenwände 37 der Ringnut 35 anliegt, sodass dieser relativ zu dem Anpress-Kolben 33 gegen Verschiebung gesichert ist und gegen den Stößel 15 reibt. Die Seitenwände 37 der Ringnut 35 sind derart ausgestaltet, dass der Anpress-Kolben 33 entlang der Mittel-Längs-Achse 14 auf dem Stößel 15 geführt wird.

Ausgehend von der dem Gehäuse 13 zugewandten Seitenwand 37 erstreckt sich ein einstückig mit dem Anpress-Abscbnitt 34 ausgebildeter erster Anschlag-Abschnitt 38. Der erste Anschlag-Abschnitt 38 ist rohrförmig ausgebildet und liegt nicht gegen den Aufnahme-Abschnitt 24 des Gehäuses 13 an. Der Anschlag-Abschnitt 38 weist entlang seines Innen-Umfangs mehrere gleichmäßig beabstandet angeordnete und sich entlang der Mittel-Längs-Achse 14 erstreckende sowie in Richtung des Reibungs-Dämpfungs-Belags 36 sich verjüngende Längs-Nuten 39 auf, welche sich bis zu dem Reibungs-Dämpfungs-Belag 36 erstrecken. Der Reibungs-Dämpfungs-Belag 36 liegt somit im Bereich der Nuten 39 in axialer Richtung frei- Jeweils zwei Nuten 39 liegen sich diametral gegenüber. Zwischen zwei nebeneinander angeordneten Nuten 39 befindet sich ein Keil 40, der sich in entgegengesetzter Richtung zu den Nuten 39 verjüngt und rampenförmig in Richtung der Seitenwand 37 verläuft sowie einstückig mit dieser ausgebildet ist. Jeder Keil 40 weist Keil-Seitenwände 41 auf, die jeweils einen Nutgrund 42 einer benachbarten Nut 39 begrenzen. Jeder Nutgrund 42 verläuft in Richtung des Reibungs-Dämpfungs-Belags 36 ebenfalls rampenförmig.

Entsprechend dem ersten Anschlag-Abschnitt 38 erstreckt sich ausgehend von der dem Stößel 15 zugewandten Seitenwand 37 ein zweiter Anschlag-Abschnitt 43. Der zweite Anschlag-Abschnitt 43 ist entsprechend dem ersten Anschlag-Abschnitt 38 aufgebaut und einstückig mit dem Anpress-Abschnitt 34 ausgebildet. Die Nuten 39 und Keile 40 des zweiten Anschlag-Abschnitts 43 sind gegenüber dem ersten Anschlag-Abschnitt 38 verdreht angeordnet. Das bedeutet, dass einer Nut 39 des zweiten Anschlag-Abschnitts 43 ein Keil 40 des ersten Anschlag-Abschnitts 38 gegenüberliegt und umgekehrt. Der Anpress-Kolben 33 kann zur einfacheren Montage des Reibungs-Dämpfungs-Belags 36 auch mehrteilig ausgestaltet sein.

Zur Begrenzung der Bewegung des Anpress-Kolbens 33 mit dem Reibungs-Dämpfungs-Belag 36 und zur Erreichung der Dämpfungsarbeit weist die Reibungs-Dämpfungs-Einheit 32 ein gehäuseseitiges erstes Anschlag-Element 44 und ein stöBelseitiges zweites Anschlag-Element 45 auf. Das erste Anschlag-Element 44 umfasst mehrere Anschlag-Stempel 46, die sich ausgehend von dem Anschlag-Bund 27 des Gehäuses 13 entlang der Mittel-Längs-Achse 14 erstrecken. Die Anschlag-Stempel 46 des ersten Anschlag-Elements 44 sind einstückig mit dem Anschlag-Bund 27 und dem Führungs-Abschnitt 23 des Gehäuses 13 ausgebildet. Es ist auch möglich, eine zweiteilige Ausgestaltung, gegebenenfalls aus verschiedenen Materialien, vorzusehen. Die Anschlag-Stempel 46 sind derart angeordnet und ausgebildet, dass sie eine Verlängerung des Führungs-Abschnitts 23 bilden, sodass der Stößel 15 durch die Anschlag-Stempel 46 des ersten Anschlag-Elements 44 zusätzlich geführt wird Die Anschlag-Stempel 46 sind weiterhin derart ausgestaltet und angeordnet, dass der Anpress-Kolben 33 mit den Nuten 39 des ersten Anschlag-Abschnitts 38 die Anschlag-Stempel 46 umgreifen kann, sodass der Anpress-Kolben 33 in einen ersten ringförmigen Zwischenraum 47 zwischen dem Aufnahme-Abschnitt 24 und den Anschlag-Stempeln 46 verschiebbar ist. Eine detaillierte Beschreibung der Anschlag-Stempel 46 und deren Anordnung erfolgt nachfolgend im Zusammenhang mit der Beschreibung des zweiten Anschlag-Elements 45.

Das zweite Anschlag-Element 45 weist ebenfalls mehrere Anschlag-Stempel 46 auf, die einstückig mit dem Verschluss-Kappen-Bund 29 der Verschluss-Kappe 28 ausgebildet sind und sich entlang der Mittel-Längs-Achse 14 erstrecken. Es ist auch möglich, eine zweiteilige Ausgestaltung, gegebenenfalls aus verschiedenen Materialien, vorzusehen. Die Anschlag-Stempel 46 sind entlang eines Kreises um die Mittel-Längs-Achse 14 angeordnet und bilden eine bündige Verlängerung der Verschluss-Kappen-Öffnung 31, sodass der Stößel 15 durch die Anschlag-Stempel 46 zusätzlich geführt wird. Zu diesem Zweck sind die Anschlag-Stempel 46 als Kreisringsegmente ausgestaltet, wobei eine dem Stößel 15 zugewandte Führungs-Wand 48 entsprechend dem Außen-Umfang des Stößels 15 gewölbt ist. Jeder Anschlag-Stempel 46 verjüngt sich ausgehend von dem Verschluss-Kappen-Bund 29 in Richtung des Reibungs-Dämpfungs-Belags 36 und weist zwei Anschlag-Stempel-Seitenwände 49 und eine Anschlag-Stempel-Stirnwand 50 auf. Außerdem weist jeder Anschlag-Stempel 46 an seiner dem Stößel 15 abgewandten Seite eine Anschlag-Stempel-Außenwand 51 auf, die in Richtung des Verschluss-Kappen-Bundes 29 rampenförmig zuläuft. Jeweils zwei Anschlag-Stempel 46 liegen sich diametral gegenüber, wobei diese zwei Anschlag-Stempel 46 entlang der Mittel-Längs-Achse 14 eine einheitliche Länge, jedoch im Vergleich zu den verbleibenden Anschlag-Stempeln 46 eine abweichende Länge, aufweisen. Es ist auch eine andere Anordnung möglich. Die Anschlag-Stempel 46 des zweiten Anschlag-Elements 45 bilden zusammen mit dem Aufnahme-Abschnitt 24 des Gehäuses 13 einen zweiten ringförmigen Zwischenraum 52, in den der zweite Anschlag-Abschnitt 43 des Anpress-Kolbens 33 verschiebbar ist.

Der Detailaufbau des ersten Anschlag-Elements 44 entspricht dem des zweiten Anschlag-Elements 45, wobei die Anschlag-Stempel 46 des zweiten Anschlag-Elements 45 im Vergleich zu denen des ersten Anschlag-Elements 44 versetzt angeordnet sind, um in die versetzt angeordneten Nuten 39 des zweiten Anschlag-Abschnitts 43 eingreifen zu können.

Prinzipiell kann die Ausgestaltung der Anschlag-Stempel 46, insbesondere deren Länge und Form, beliebig sein, solange die Anschlag-Stempel 46 in ihrer Lage und Form mit den entsprechenden Nuten 39 korrespondieren, sodass die Anschlag-Stempel 46 mit dem Reibungs-Dämpfungs-Belag 36 zusammen wirken können. Bevorzugt sind Stempel verschiedener Länge, um eine kontinuierliche Dämpfung mit progressivem Anstieg zu gewährleisten.

Innerhalb des Gehäuses 13 wird mittels des Führungs-Abschnitts 23 und der Verschluss-Kappen-Öffnung 31 des Verschluss-Kappen-Bundes 29 der Stößel 15 entlang der Mittel-Längs-Achse 14 verschiebbar geführt. Der Stößel 15 ist rohrförmig ausgebildet und weist ein sich verjüngendes Ende auf.

Im Folgenden wird die Funktionsweise des Reibungsdämpfers 12 beim Betrieb der Trommelwaschmaschine genauer beschrieben. Zunächst wird das Wasch-Aggregat 2 mit Wäsche beladen und die Wasch-Trommel mittels des Antriebs-Motors 3 und des Riemen-Triebs 4 auf Drehzahl gebracht. Zunächst wird das Dämpfungsverhalten des Reibungsdämpfers 12 bei kleinen Schwingungsamplituden beschrieben. Diese kleinen Schwingungsamplituden treten bei sogenannten unkritischen Drehzahlen, beispielsweise beim Schleudern der Trommelwaschmaschine, auf In diesem Fall ist die Bewegung des Stößels 15 relativ zu dem Gehäuse 13 entlang der Mittel-Längs-Achse 14 derart gering, dass der Anpress-Kolben 33 mit dem Reibungs-Dämpfungs-Belag 36 nicht mit dem ersten und zweiten Anschlag-Element 44, 45 in Berührung kommt. Der Anpress-Kolben 33 führt aufgrund der Haftreibung des Reibungs-Dämpfungs-Belags 36 relativ zu dem Stößel 15 keine Bewegung aus, sodass der Reibungs-Dämpfungs-Belag 36 nicht an dem Stößel 15 reibt. Dieser Zustand wird als reibungsfreier Leerhub bezeichnet. Der Reibungsdämpfer 12 weist in diesem Zustand ein geringes Dämpfungsverhalten auf, das durch die sonstigen Reibungsverluste bei der Bewegung des Stößels 15 charakterisiert ist. Das Gehäuse 13 und der Stößel 15 sind in diesem Zustand weitestgehend entkoppelt.

Ist im Gegensatz dazu die Drehzahl der Trommelwaschmaschine in einem Bereich um eine sogenannte kritische Drehzahl oder liegt eine größere Unwucht vor, so führt der Stößel 15 relativ zu dem Gehäuse 13 große Schwingungsamplituden aus. In diesem Fall tritt der Anpress-Kolben 33 mit dem Reibungs-Dämpfungs-Belag 36 in Wechselwirkung mit den Anschlag-Elementen 44, 45 und der Anpress-Kolben 33 führt relativ zu dem Stößel 15 eine Bewegung aus, sodass der Reibungs-Dämpfungs-Belag 36 an dem Stößel 15 reibt. Wird der Stößel 15 ausgehend von der in Fig. 3 dargestellten Position in Einschub-Richtung 25 bewegt, so wird der Anpress-Kolben 33 aufgrund der Haftreibung zwischen dem Reibungs-Dämpfungs-Belag 36 und dem Stößel 15 zunächst in Einschub-Richtung 25 mitgenommen. Mit zunehmender Einschub-Tiefe wird der erste Anschlag-Abschnitt 38 mit den Nuten 39 über die Anschlag-Stempel 46 des ersten Anschlag-Elements 44 geführt. Berühren die Anschlag-Stempel 46 mit ihrer Anschlag-Stempel-Stirnwand 50 den im Bereich der Nuten 39 freiliegenden Reibungs-Dämpfungs-Belag 36, so wird die Bewegung des Anpress-Kolbens 33 gebremst und es kommt zu einer Relativbewegung zwischen dem Reibungs-Dämpfungs-Belag 36 und dem Stößel 15. Der Reibungs-Dämpfungs-Belag 36 reibt an dem Stößel 15 und erzeugt ein Dämpfungsverhalten. Das Dämpfungsverhalten ist abhängig von der Geschwindigkeit der Relativbewegung und unabhängig von der Eintauchtiefe der Anschlag-Stempel 46 in den Reibungs-Dämpfungs-Belag 36. Der elastische Reibungs-Dämpfungs-Belag 36 weist in dem Reibungsdämpfer 12 zusätzlich die Funktion eines Anschlagpuffers auf. Durch die unterschiedliche Länge der Anschlag-Stempel 46 tauchen die Anschlag-Stempel 46 sukzessive in den Reibungs-Dämpfungs-Belag 36 ein, sodass es nicht zu einem harten Aufschlagen des Anpress-Kolbens 33 und folglich zu keinem schlagartigen Kraftanstieg auf das Maschinen-Gestell 8 kommt. Dadurch, dass jeweils zwei gegenüberliegend angeordnete Anschlag-Stempel 46 eine einheitliche Länge aufweisen, ist zudem sichergestellt, dass sich der Anpress-Kolben 33 auf dem Stößel 15 nicht verkantet

Bei einer Bewegungsumkehr des Stößels 15 wird der Anpress-Kolben 33 zunächst wieder aufgrund der Haftreibung zwischen dem Reibungs-Dämpfungs-Belag 36 und dem Stößel 15 entgegen der Einschub-Richtung 25 mitgenommen, sodass sich der Anpress-Kolben 33 relativ zu dem Stößel 15 nicht bewegt. Mit zunehmender Bewegung entgegen der Einschub-Richtung 25 wird der zweite Anschlag-Abschnitt 43 mit den Nuten 39 über die Anschlag-Stempel 46 des zweiten Anschlag-Elements 45 bewegt. Durch das Eintauchen der Anschlag-Stempel 46 in den Reibungs-Dämpfungs-Belag 36 wird die Bewegung des Anpress-Kolbens 33 gebremst, sodass der Reibungs-Dämpfungs-Belag 36 eine Relativbewegung zu dem Stößel 15 ausführt und an dem Stößel 15 reibt Das Zusammenwirken des zweiten Anschlag-Elements 45 mit dem Reibungs-Dämpfungs-Belag 36 entspricht dem oben beschriebenen Eintauchverhalten des ersten Anschlag-Elements 44. Als endgültiger Anschlag des Anpress-Kolbens 33 dient der Verschluss-Kappen-Bund 29. Bei einer erneuten Bewegungsumkehr des Stößels 15 wird der Anpress-Kolben 33 aufgrund der Haftreibung zwischen dem Reibungs-Dämpfungs-Belag 36 und dem Stößel 15 wieder in Einschub-Richtung 25 mitgenommen. Der beschriebene Bewegungszyklus wiederholt sich nun.

Dadurch, dass der Reibungs-Dämpfungs-Belag 36 zusätzlich als Anschlagpuffer wirkt, ist der Reibungsdämpfer 12 einfach aufgebaut und kostengünstig herstellbar. Außerdem kann der reibungsfreie Leerhub durch einfache konstruktive Änderungen beliebig eingestellt werden.

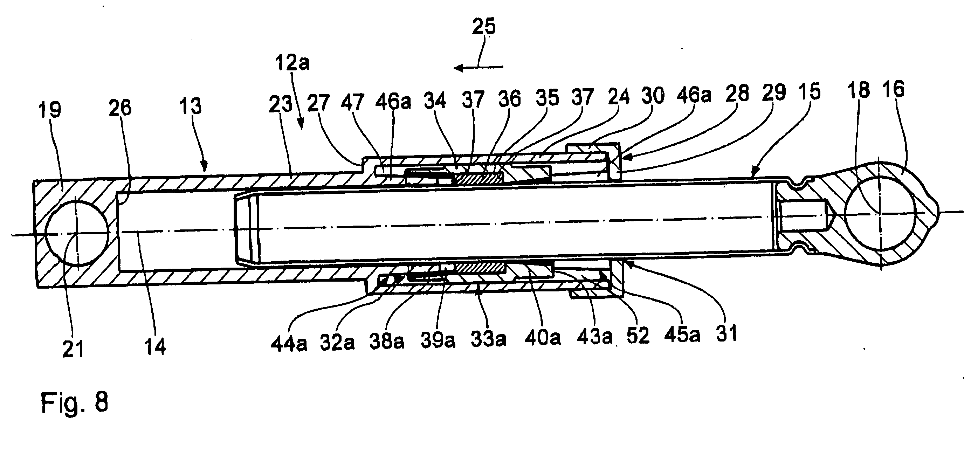

Nachfolgend wird unter Bezugnahme auf die Fig. 8 ein zweites Ausführungsbeispiel der Erfindung beschrieben. Konstruktiv identische Teile erhalten dieselben Bezugszeichen, wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten "a". Der wesentliche Unterschied gegenüber dem ersten Ausfühningsbeispiel besteht darin, dass der Anpress-Kolben 33a und die Anschlag-Elemente 44a, 45a derart ausgebildet sind, dass mindestens einer der Anschlag-Stempel 46a zumindest teilweise in einer der Nuten 39a angeordnet ist. Durch eine derartige Ausbildung des Anpress-Kolbens 33a und der Anschlag-Elemente 44a, 45a wird sichergestellt, dass entweder mindestens ein Anschlag-Stempel 46a des ersten Anschlag-Elements 44a oder mindestens ein Anschlag-Stempel 46a des zweiten Anschlag-Elements 45a in Eingriff mit einer der Nuten 39a des Anpress-Kolbens 33a ist, wodurch eine Verdrehsicherung des Anpress-Kolbens 33a relativ zu den Anschlag-Elementen 44a, 45a erzielt wird. Vorzugsweise weisen die Anschlag-Elemente 44a, 45a jeweils vier Anschlag-Stempel 46a auf Durch eine derartige Anzahl der Anschlag-Stempel 46a wird bei gleichbleibender Funktionalität des Reibungsdämpfers 12a der konstruktive Aufwand optimiert. Hinsichtlich der weiteren Funktionsweise wird auf das erste Ausführungsbeispiel verwiesen.

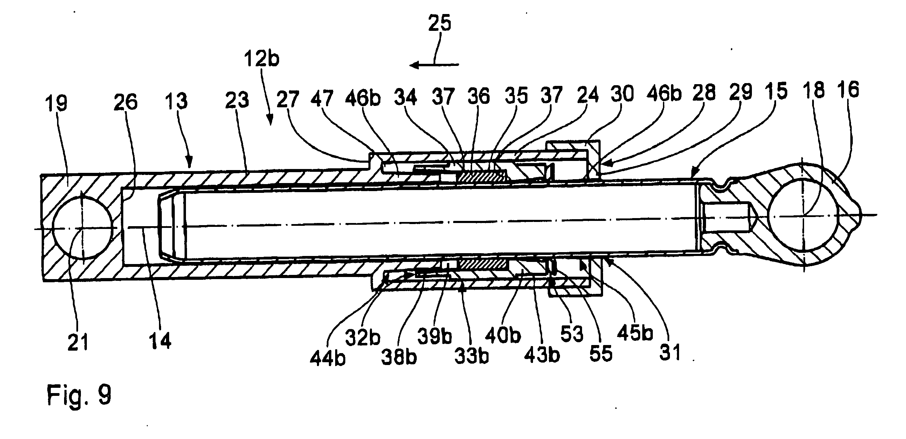

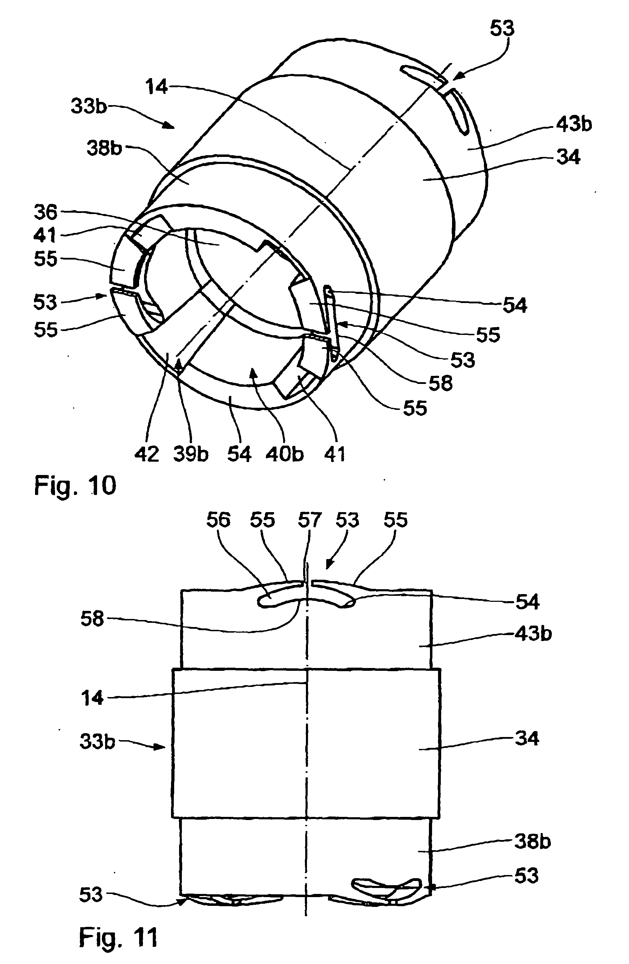

Nachfolgend wird unter Bezugnahme auf die Fig. 9 bis 11 ein drittes Ausführungsbeispiel der Erfindung beschrieben. Konstruktiv identische Teile erhalten dieselben Bezugszeichen, wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten "b". Der wesentliche Unterschied gegenüber den vorangegangenen Ausführungsbeispielen besteht darin, dass zur Vermeidung eines harten Anschlagens des Anpress-Kolbens 33b an dem Anschlag-Bund 27 oder dem Verschluss-Kappen-Bund 29 bei extremen Schwingungsamplituden Anschlagpuffer 53 vorgesehen sind. Die Anschlag-Abschnitte 38b, 43b des Anpress-Kolbens 33b weisen jeweils vier Nuten 39b und zwischen den Nuten 39b angeordnete Keile 40b auf. Weiterhin weisen die Anschlag-Abschnitte 38b, 43b jeweils zwei Anschlagpuffer 53 auf, die an Keil-Stirnwänden 54 von zwei einander gegenüberliegenden Keilen 40b ausgebildet sind. Die Anschlagpuffer 53 des ersten Anschlag-Abschnitts 38b sind um die Mittel-Längs-Achse 14 versetzt zu den Anschlagpuffern 53 des zweiten Anschlag-Abschnitts 43b angeordnet.

Die Anschlagpuffer 53 sind identisch ausgebildet, sodass nachfolgend lediglich ein Anschlagpuffer 53 beschrieben wird. Der Anschlagpuffer 53 weist zwei einteilig mit dem Keil 40b ausgebildete und elastisch verbiegbare Anschlagpuffer-Elemente 55 auf, die in Form von gebogenen Zungen ausgebildet sind und ausgehend von den Keil-Seitenwänden 41 aufeinander zulaufen. Die zungenförmigen Anschlagpuffer-Elemente 55 springen entlang der Mittel-Längs-Achse 14 über die Keil-Stirnwände 54 der benachbarten Keile 40b vor und verjüngen sich ausgehend von den Keil-Seitenwänden 41 entlang der Mittel-Längs-Achse 14 betrachtet. Die Anschlagpuffer-Elemente 55 und die zugehörige Keil-Stirnwand 54 begrenzen im Wesentlichen eine Anschlagpuffer-Ausnehmung 56, die sich teilweise in den Anpress-Kolben 33b erstreckt, sodass die zu den Anschlagpuffer-Elementen 55 gehörige Keil-Stirnwand 54 im Vergleich zu den Keil-Stirnwänden 54 der benachbarten Keile 40b zurückgesetzt ist. Die Anschlagpuffer-Elemente 55 sind in die Auschlagpuffer-Ausnehmung 56 verbiegbar. Zwischen den aufeinander zulaufenden Anschlagpuffer-Elementen 55 ist eine Anschlagpuffer-Durchbrechung 57 ausgebildet, sodass die Anschlagpuffer-Elemente 55 mittig beabstandet voneinander angeordnet sind und sich nicht berühren. Relativ zu der Anschlagpuffer-Ausnehmung 56 ist gegenüberliegend zu der Anschlagpuffer-Durchbrechung 57 eine mit der Keil-Stirnwand 54 einteilig und bogenförmig ausgebildete Anschlagpuffer-Begrenzung 58 angeordnet. Die Anschlagpuffer-Begrenzung 58 erstreckt sich zur Begrenzung des Verbiegens der Anschlagpuffer-Elemente 55 ausgehend von der Keil-Stirnwand 54 entlang der Mittel-Längs-Achse 14 in die Anschlagpuffer-Ausnehmung 56. Alternativ kann die Anschlagpuffer-Begrenzung 58 auch entfallen, so dass das Verbiegen der Anschlagpuffer-Elemente 55 von der zugehörigen Keil-Stirnwand 54 begrenzt wird.

Im Folgenden wird die Funktionsweise des Reibungsdämpfers 12b bei extrem großen Schwingungsamplituden beschrieben. Bei einer Bewegung des Stößels 15 in Einschub-Richtung 25 tauchen die Anschlag-Stempel 46b des ersten Anschlag-Elements 44b in den Reibungs-Dämpfungs-Belag 36 ein, sodass der durch den Stößel 15 mitgenommene Anpress-Kolben 33b eine Relativbewegung zu dem Stößel 15 ausführt und an dem Stößel 15 reibt. Durch das Eintauchen der Anschlag-Stempel 46b wirkt der elastische Reibungs-Dämpfungs-Belag 36 der Bewegung des Anpress-Kolbens 33b entgegen und puffiert das Auftreffen der Anschlag-Stempel 46b auf den Reibungs-Dämpfungs-Beleg 36. Ist die Schwingungsamplitude des Reibungsdämpfers 12b derart groß, dass zur Begrenzung der Bewegung des Anpress-Kolbens 33b die Pufferwirkung des Reibungs-Dämpfungs-Belags 36 nicht ausreicht, so treten die Anschlagpuffer 53 in Funktion. Bei extrem großen Schwingungsamplituden schlagen die Anschlagpuffer-Elemente 55 der Anschlagpuffer 53 gegen den Anschlag-Bund 27 des Führungs-Abschnitts 23 an. Mit zunehmender Bewegung des Anpress-Kolbens 33b in Einschub-Richtung 25 verbiegen sich die elastischen Anschlagpuffer-Elemente 55 in Richtung der Anschlagpuffer-Begrenzung 58 und wirken somit der Bewegung des Anpress-Kolbens 33b puffernd entgegen. Kommt die Bewegung des Anpress-Kolbens 33b zum Stillstand, so federn die elastischen Anschlagpuffer-Elemente 55 wieder aus und bewegen den Anschlag-Kolben 33b solange entgegen die Einschub-Richtung 25 bis sie entspannt sind. Bei extrem großen Schwingungsamplituden wird das Verbiegen der Anschlagpuffer-Elemente 55 durch Anschlagen an die Anschlagpuffer-Begrenzung 58 oder, falls keine Anschlagpuffer-Begrenzung 58 vorgesehen ist, durch Anschlagen an die zugehörige Keil-Stirnwand 54 begrenzt. Gleichzeitig schlagen die Keil-Stirnwände 54 der zu den Anschlagpuffern 53 benachbarten Keile 40b an den Anschlag-Bund 27 an. Bei einer Bewegungsumkehr des Stößels 15 wird der Anpress-Kolben 33b entgegen der Einschub-Richtung 25 mitgenommen, wobei sich der beschriebene Vorgang beim Anschlagen des Anpress-Kolbens 33b an den Verschluss-Kappen-Bund 29 wiederholt. Alternativ können die Anschlagpuffer 53 auch an dem Anschlag-Bund 27 und dem Verschluss-Kappen-Bund 29 ausgebildet sein. Hinsichtlich der weiteren Funktionsweise wird auf die vorangegangenen Ausführungsbeispiele verwiesen.

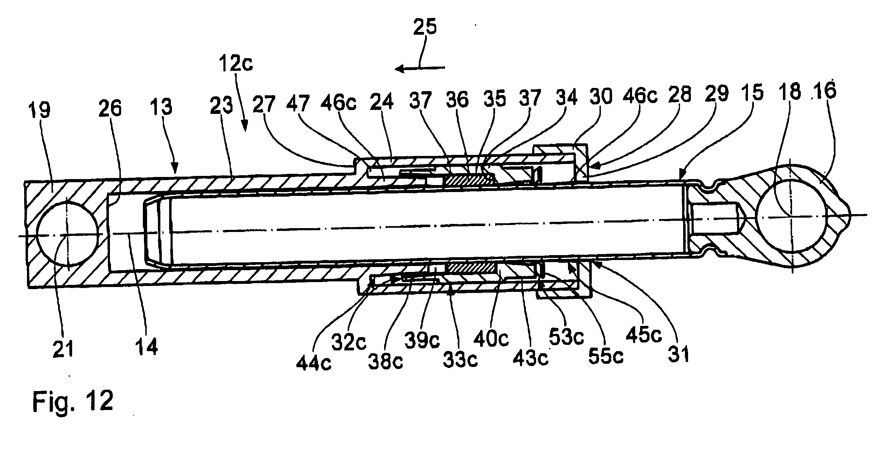

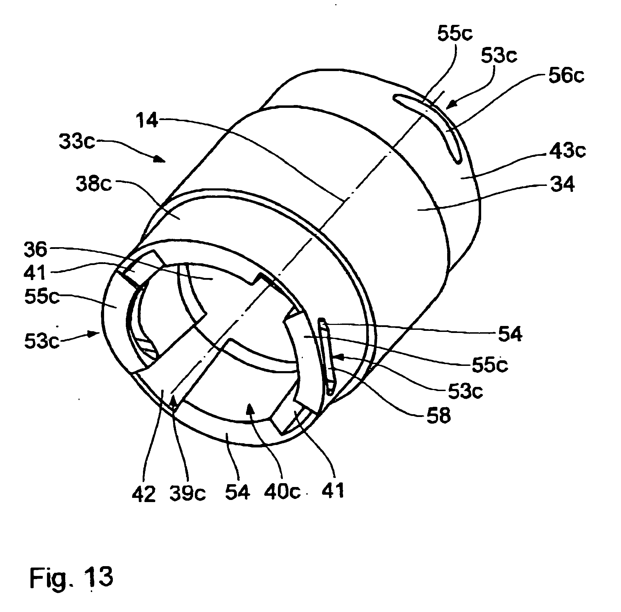

Nachfolgend wird unter Bezugnahme auf die Fig. 12 und 13 ein viertes Ausführungsbeispiel der Erfindung beschrieben. Konstruktiv identische Teile erhalten dieselben Bezugszeichen, wie bei den vorangegangenen Ausfübmngsbeispielen, auf deren Beschreibung hiermit verwiesen wird. Konstruktiv unterschiedliche, jedoch funktionell gleichartige Teile erhalten dieselben Bezugszeichen mit einen nachgestellten "c"- Der wesentliche Unterschied gegenüber den vorangegangenen Ausführungsbeispielen besteht darin, dass die Anschlagpuffer 53c jeweils ein durchgehendes und sich mittig verschmälerndes Anschlagpuffer-Element 55c in Form eines Bogens aufweisen, das die Anschlagpuffer-Ausnehmung 56 auf der der Keil-Stirnwand 54 gegenüberliegenden Seite vollständig begrenzt. Eine Anschlagpuffer-Durchbrechung ist nicht vorgesehen. Alternativ können die Anschlagpuffer 53c auch an dem Anschlag-Bund 27 und dem Verschluss-Kappen-Bund 29 angeordnet sein. Hinsichtlich der Funktionsweise des Reibungsdämpfers 12c wird auf die vorangegangenen Ausführungsbeispiele verwiesen.

## Patentansprüche

1. Dämpfer (12; 12a; 12b; 12c), insbesondere für Waschmaschinen mit Schleudergang, mit
a. einem eine Mittel-Längs-Achse (14) aufweisenden rohrförmigen Gehäuse (13),
b. einem in dem Gehäuse (13) verschiebbar geführten und aus einem Ende desselben herausragenden Stößel (15),
c. jeweils an einem freien Ende des Gehäuses (13) und des Stößels (15) angeordneten Befestigungs-Elementen (16, 19), und
d. einer innerhalb des Gehäuses (13) angeordneten Reibungs-Dämpfungs-Einheit (32; 32a; 32b; 32c), umfassend
i. mindestens einen relativ zu dem Gehäuse (13) und dem Stößel (15), entlang der Mittel-Längs-Achse (14) verschiebbaren und in längsaxialer Richtung zumindest teilweise freiliegenden, elastischen Reibungs-Dämpfungs-Belag (36) zur Erzeugung einer vorgegebenen Reibungsdämpfung, und
ii. mindestens ein relativ zu dem Gehäuse (13) ortsfestes, dem mindestens einen Reibungs-Dämpfungs-Belag (36) zugewandtes Anschlag-Element (44, 45; 44a, 45a; 44b, 45b; 44c, 45c) zur Begrenzung der Bewegung des mindestens einen Reibungs-Dämpfungs-Belags (36), wobei das mindestens eine Anschlag-Element (44, 45; 44a, 45a; 44b, 45b; 44c, 45c) derart ausbildet ist, dass es zur Dämpfung der Bewegung unmittelbar mit dem mindestens einen Reibungs-Dämpfungs-Belag (36) zusammenwirkt, **dadurch gekennzeichnet, dass** das mindestens eine Anschlag-Element (44, 45; 44a, 45a; 44b, 45b; 44c, 45c) mehrere sich entlang der Mittel-Längs-Achse (14) erstreckende Anschlag-Stempel (46; 46a; 46b; 46c) aufweist, welche zur Dämpfung der Bewegung unmittelbar mit dem mindestens einen Reibungs-Dämpfungs-Belag (36) zusammenwirken.

2. Dämpfer nach Anspruch 1, **dadurch gekennzeichnet, dass** die Anschlag-Stempel (46; 46a; 46b; 46c) entlang eines Kreises um die Mittel-Längs-Achse (14) gleichmäßig beabstandet angeordnet sind.

3. Dämpfer nach Anspruch 1 oder 2, **dadurch gekennzeichnet, dass** die Anschlag-Stempel (46; 46a; 46b; 46c) zumindest teilweise eine voneinander abweichende Länge aufweisen.

4. Dämpfer nach einem der Ansprüche 1 bis 3, **dadurch gekennzeichnet, dass** jeweils zwei Anschlag-Stempel (46; 46a; 46b; 46c) diametral gegenüber liegen.

5. Dämpfer nach Anspruch 4, **dadurch gekennzeichnet, dass** die jeweils zwei gegenüberliegenden Anschlag-Stempel (46; 46a; 46b; 46c) eine einheitliche Länge aufweisen.

6. Dämpfer nach einem der Ansprüche 1 bis 5, **dadurch gekennzeichnet, dass** sich die Anschlag-Stempel (46; 46a; 46b; 46c) in Richtung des mindestens einen Reibungs-Dämpfungs-Belags (36) verjüngen.

7. Dämpfer nach einem der vorangegangenen Ansprüche, **dadurch gekennzeichnet, dass** ein gehäuseseitiges erstes Anschlag-Element (44; 44a; 44b; 44c) zur gehäuseseitigen Begrenzung und ein stößelseitiges zweites Anschlag-Element (45; 45a; 45b; 45c) zur stößelseitigen Begrenzung der Bewegung des mindestens einen Reibungs-Dämpfungs-Belags (36) vorgesehen ist.

8. Dämpfer nach einem der vorangegangenen Ansprüche, **dadurch gekennzeichnet, dass** die Reibungs-Dämpfungs-Einheit (32; 32a; 32b; 32c) einen den mindestens einen Reibungs-Dämpfungs-Belag (36) aufnehmenden Anpress-Kolben (33; 33a; 33b; 33c) aufweist.

9. Dämpfer nach Anspruch 8, **dadurch gekennzeichnet, dass** der Anpress-Kolben (33; 33a; 33b; 33c) mehrere sich parallel zu der Mittel-Längs-Achse (14) erstreckende und sich in Richtung des Reibungs-Dämpfungs-Belags (36) verjüngende Nuten (39; 39a; 39b; 39c) aufweist.

10. Dämpfer nach Anspruch 9, **dadurch gekennzeichnet, dass** der Anpress-Kolben (33a; 33b; 33c) und die Anschlag-Elemente (44a, 45a; 44b, 45b; 44c, 45c) derart ausgebildet sind, dass mindestens einer der Anschlag-Stempel (46a; 46b; 46c) zumindest teilweise in einer der Nuten (39a; 39b; 39c) angeordnet ist.

11. Dämpfer nach einem der Ansprüche 8 bis 10, **dadurch gekennzeichnet, dass** zur Begrenzung der Bewegung des Anpress-Kolbens (33b; 33c) mindestens ein elastischer Anschlagpuffer (53; 53c) vorgesehen ist.

12. Dämpfer nach Anspruch 11, **dadurch gekennzeichnet, dass** der mindestens eine Anschlagpuffer (53; 53c) einteilig mit einer Stirnwand (54) des Anpress-Kolbens (33b; 33c) ausgebildet ist.

13. Dämpfer nach Anspruch 11 oder 12, **dadurch gekennzeichnet, dass** der mindestens eine Anschlagpuffer (53; 53c) bogenförmig und elastisch verbiegbar ausgebildet ist und mindestens eine Anschlagpuffer-Ausnehmung (56) teilweise begrenzt.

14. Dämpfer nach einem der Ansprüche 11 bis 13, **dadurch gekennzeichnet, dass** der mindestens eine Anschlagpuffer (53; 53c) mindestens eine Anschlagpuffer-Begrenzung (58) zur Begrenzung des Verbiegens aufiveist.

## Claims

1. Damper (12; 12a; 12b; 12c), in particular for spin-drying washing machines, comprising
a. a tubular casing (13) which has a central longitudinal axis (14);
b. a tappet (15) which is guided for displacement in the casing (13) and projects from an end thereof;
c. fastening elements (16, 19) which are mounted on a free end of the casing (13) and of the tappet (15), respectively; and
d. a frictional damping unit (32; 32a; 32b; 32c) which is disposed inside the casing (13), comprising
i. at least one elastic frictional damping lining (36) which is displaceable in relation to the casing (13) and the tappet (15) along the central longitudinal axis (14) and which lies bare at least sectionally in a lengthwise axial direction to produce a given friction-damping effect, and
ii. at least one stop element (44, 45; 44a, 45a; 44b, 45b; 44c, 45c) which is stationary in relation to the casing (13) and turned towards the at least one frictional damping lining (36), defining the motion of the at least one frictional damping lining (36), with the at least one stop element (44, 45; 44a, 45a; 44b, 45b; 44c, 45c) being configured such that, for motion damping, it directly cooperates with the at least one frictional damping lining (36), **characterized in that** the at least one stop element (44, 45; 44a, 45a; 44b, 45b; 44c; 45c) is provided with several stop pins (46; 46a; 46b; 46c) extending along the central longitudinal axis and cooperating directly with the at least one frictional damping lining (36) for motion damping.

2. Damper according to claim 1, **characterized in that** the stop pins (46; 46a; 46b; 46c) are regularly spaced along a circle around the central longitudinal axis (14).

3. Damper according to claim 1 or 2, **characterized in that** the stop pins (46, 46a; 46b; 46c) at least partially have varying lengths.

4. Damper according to one of claims 1 to 3, **characterized in that** two stop pins (46; 46a; 46b; 46c) at a time oppose one another diametrically.

5. Damper according to claim 4, **characterized in that** the two opposite stop pins (46; 46a; 46b; 46c) have an identical length.

6. Damper according to one of claims 1 to 5, **characterized in that** the stop pins (46; 46a; 46b; 46c) taper in a direction of the at least one frictional damping lining (36).

7. Damper according to one of the preceding claims, **characterized in that** a first stop element (44; 44a; 44b; 44c), on the side of the casing (13; 13a; 13b; 13c), is provided for defining, on the side of the casing (13; 13a; 13b; 13c), the motion of the at least one frictional damping lining (36), and **in that** a second stop element (45; 45a; 45b; 45c), on the side of the tappet (15), is provided for defining, on the side of the tappet (15), the motion of the at least one frictional damping lining (36).

8. Damper according to one of the preceding claims, **characterized in that** the frictional damping unit (32; 32a; 32b; 32c) comprises a contact-pressure piston (33; 33a; 33b; 33c) which accommodates the at least one frictional damping lining (36).

9. Damper according to claim 8, **characterized in that** the contact-pressure piston (33; 33a; 33b; 33c) is provided with several grooves (39; 39a; 39b; 39c) which are parallel to the central longitudinal axis (14) and taper in the direction towards the frictional damping lining (36).

10. Damper according to claim 9, **characterized in that** the contact-pressure piston (33a; 33b; 33c) and the stop elements (44a, 45a; 44b, 45b; 44c, 45c) are configured such that at least one of the stop pins (46a; 46b; 46c) is disposed at least sectionally in one of the grooves (39a; 39b; 39c).

11. Damper according to one of claims 8 to 10, **characterized in that** at least one flexible stop buffer (53; 53c) is provided for defining the motion of the contact-pressure piston (33b; 33c).

12. Damper according to claim 11, **characterized in that** the at least one stop buffer (53; 53c) is integral with a front wall (54) of the contact-pressure piston (33b; 33c).

13. Damper according to claim 11 or 12, **characterized in that** the at least one stop buffer (53; 53c) is convex and flexible, sectionally defining at least one stop-buffer recess (56).

14. Damper according to one of claims 11 to 13, **characterized in that** the at least one stop buffer (53; 53c), for defined flexion, comprises at least one stop-buffer limit (58).

## Revendications

1. Amortisseur (12 ; 12a ; 12b ; 12c), en particulier pour un lave linge avec phase d'essorage, avec
a. une carcasse (13) en forme de tube présentant un axe longitudinal central (14),
b. un coulisseau (15) disposé de façon à être déplaçable dans la carcasse (13) et jaillissant de cette dernière,
c. des éléments de fixations (16, 19) disposés à respectivement à une extrémité libre de la carcasse (13) et du coulisseau (15), et
d. une unité d'amortissement de frottement (32 ; 32a ; 32b ; 32c) disposée à l'intérieur de la carcasse (13), et comportant
i. au moins une garniture d'amortissement de frottement (36) élastique, déplaçable le long de l'axe longitudinal central (14), relativement à la carcasse (13) et au coulisseau (15) et dégagée du moins partiellement, dans le sens de l'axe longitudinal, et servant à produire un amortissement de frottement prédéterminé, et
ii. au moins un élément de butée (44, 45 ; 44a, 45a ; 44b, 45b ; 44c, 45c) immobile, orienté vers la garniture d'amortissement de frottement (36), au moins au nombre de une, relativement à la carcasse (13), et servant à limiter le mouvement de la garniture d'amortissement de frottement (36) au moins au nombre de une, où l'élément de butée (44, 45 ; 44a, 45a ; 44b, 45b ; 44c, 45c), au moins au nombre de un, est conçu de telle sorte qu'il agit directement avec la garniture d'amortissement de frottement (36), au moins au nombre de une, afin d'amortir le mouvement, **caractérisé en ce que** l'élément de butée (44, 45 ; 44a, 45a ; 44b, 45b ; 44c, 45c), au moins au nombre de un, présente plusieurs tampons de butée (46 ; 46a ; 46b ; 46c) s'étirant le long de l'axe longitudinal central (14), lesquels agissent directement avec la garniture d'amortissement de frottement (36), au moins au nombre d'une.

2. Amortisseur selon la revendication 1, **caractérisé en ce que** les tampons de butée (46 ; 46a ; 46b ; 46c) sont disposés à intervalles réguliers sur un cercle, autour de l'axe longitudinal central (14).

3. Amortisseur selon la revendication 1 ou 2, **caractérisé en ce que** les tampons de butée (46 ; 46a ; 46b ; 46c) présentent, du moins partiellement, une longueur différente.

4. Amortisseur selon les revendications 1 à 3, **caractérisé en ce que** à chaque fois, deux tapons de butée (46 ; 46a ; 46b ; 46c) sont diamétralement opposés.

5. Amortisseur selon la revendication 4, **caractérisé en ce que** chaque paire de tampons de butée (46 ; 46a ; 46b ; 46c) en vis-à-vis, présente une longueur uniforme.

6. Amortisseur selon la revendication 1 ou 2, **caractérisé en ce que** les tampons de butée (46 ; 46a ; 46b ; 46c) convergent dans le sens de la garniture d'amortissement de frottement (36), au moins au nombre de une.

7. Amortisseur selon l'une des revendications précédentes, **caractérisé en ce qu'**un premier élément de butée (44 ; 44a ; 44b ; 44c) sur le côté de la carcasse, servant de délimitation du côté de la carcasse et un second élément de butée (45 ; 45a ; 45b ; 45c) sur le côté du coulisseau, servant de délimitation du côté du coulisseau, au mouvement de la garniture d'amortissement de frottement (36), au moins au nombre de une, sont prévus.

8. Amortisseur selon l'une des revendications précédentes, **caractérisé en ce que** l'unité d'amortissement de frottement (32 ; 32a ; 32b ; 32c) présente un piston de pression (33 ; 33a ; 33b ; 33c) accueillant la garniture d'amortissement de frottement (36), au moins au nombre de une.

9. Amortisseur selon la revendication 8, **caractérisé en ce que** le piston de pression (33 ; 33a ; 33b ; 33c) présente plusieurs fentes (39 ; 39a ; 39b ; 39c) d'étendant parallèlement à l'axe longitudinal central (14) et convergeant dans le sens de la garniture d'amortissement de frottement (36).

10. Amortisseur selon la revendication 9, **caractérisé en ce que** le piston de pression (33 ; 33a ; 33b ; 33c) et les éléments de butée (44a, 45a ; 44b, 45b ; 44c, 45c) sont conçus de telle sorte, qu'au moins un des tampons de butée (46a ; 46b ; 46c) est disposé du moins partiellement, dans l'une des fentes (39a ; 39b ; 39c).

11. Amortisseur selon l'une des revendications 8 à 10, **caractérisé en ce qu'**il est prévu au moins un coussin de butée élastique (53 ; 53c) pour la délimitation du mouvement du piston de pression (33b ; 33c).

12. Amortisseur selon la revendication 11, **caractérisé en ce que** le coussin de butée (53 ; 53c), au moins au nombre de un, forme une seule pièce avec une paroi frontale (54) du piston de pression (33b ; 33c).

13. Amortisseur selon la revendication 11 ou 12, **caractérisé en ce que** le coussin de butée (53 ; 53c), au moins au nombre de un, est élastique et courbé, pour pouvoir se plier et délimite partiellement, au moins une entaille de coussin de butée (56).

14. Amortisseur selon l'une des revendications 11 à 13, **caractérisé en ce que** le coussin de butée (53 ; 53c), au moins au nombre de un, présente au moins une délimitation de cousin de butée (58) pour la délimitation de la pliure.
